# EUROPÄISCHE PATENTSCHRIFT

(11) **EP 1 775 482 B1**
(45) Veröffentlichungstag und Bekanntmachung des Hinweises auf die Patenterteilung: **03.12.2008**
(21) Anmeldenummer: 05022425.2
(22) Anmeldetag: 14.10.2005
(51) Int. Cl.: F16B 37/04

(54) **Schnellbefestigungselement**
Quick-fastening element
Elément de fixation rapide

(43) Veröffentlichungstag der Anmeldung: 18.04.2007
(73) Patentinhaber: SW Stanzwerk Glarus AG, 8750 Glarus (CH)
(72) Erfinder: Müller, Harald, 65719 Hofheim-Wallau (DE); Hagemann, Ludbert, 91608 Geslau (DE)
(74) Vertreter: Erb, Henning

(56) Entgegenhaltungen:
- EP-A- 1 462 666
- US-A- 5 209 619
- US-A- 5 375 798

## Beschreibung

Die vorliegende Erfindung befaßt sich mit einem Schnellbefestigungselement zum Verankern von Lasten in einer C-förmigen Profilschiene, die einen Längsschlitz mit parallel zu den Außenflanken verlaufenden Schlitzflanken besitzt, mit einem Halter, der einen Auflagebereich zum äußeren Auflegen auf der Profilschiene und einen Bereich zum Einführen in die Profilschiene aufweist, mittels dessen ein längliches Schließelement das Schnellbefestigungselements axial beweglich und drehstarr gehalten ist, wobei der Halter in der Profilschiene von einer Einführungsstellung in eine davon abweichende Vormontagesbellung drehbar ist und ein Drehanschlag zum Anliegen an der Profilschiene vorgesehen ist, so daß das Schnellbefestigungselement gegen ein Überdrehen gesichert ist, wobei der Halter wenigstens ein radiales Klemmelement aufweist, das in der Vormontagestellung gegen eine der beiden Schlitzflanken verklemmbar ist.

Schnellbefestigungselemente werden verwendet, um Lasten mit einem möglichst einfachen Montage- und Befestigungsaufwand in Profilschienen zu verankern, die wiederum an tragenden Strukturen befestigbar sind. Beispielsweise werden Schnellbefestigungselemente im Bereich der Gebäudetechnik verwendet, um Rohrleitungen mittels Profilschienen zu montieren. In der Regel erfolgt zunächst eine Befestigung der Profilschienen an einer Tragkonstruktion. Zur Montage der Rohrleitungen werden die Schnellbefestigungselemente an der Profilschiene in eine Vormontagestellung gebracht, in der ein genaues Ausrichten auf die Position in Bezug zur Rohrleitung erfolgen kann. Bekannte Schnellbefestigungselemente zeichnen sich dadurch aus, daß sie manuell in die Profilschienen einsetzbar sind und ohne erforderliches Werkzeug in die Vormontagestellung gebracht werden können, in der die Schnellbefestigungselemente selbständig halten, jedoch noch keine größeren Lasten aufnehmen können. Sobald die genaue Position bekannt ist, erfolgt das Fixieren mit einem handelsüblichen Werkzeug, z. B. mittels eines Schraubenschlüssels. Aus der EP 1 538 349 A1 ist ein Befestigungselement bekannt, bei dem ein äußerer Anlagebereich zum Anliegen an einer Profilschiene mit einem in die Profilschiene ragenden Käfig verbunden ist, in dem eine Schließmutter zwischen zwei Federelemente gehaltert ist, die in der Montagestellung die Schenkelenden der Profilschiene von innen hintergreift. Das Befestigungselement ist in der Vormontagestellung durch die axial gegen die Innenseite der Schenkelenden wirkenden Federelemente gehalten.

Ein Nachteil vieler bekannter Schnellbefestiger besteht darin, dass sie aufgrund der axial wirkenden Klemmelemente nur bei Profilschienen verwendet werden können, bei denen ein bestimmter C-förmiger Querschnitt vorliegt. Bei von der Unterseite gegen die Profilenden wirkenden Klemmelemente können zudem für den jeweiligen Klemmelementtyp nur Profile mit gleicher Materialstärke verwendet werden.

Häufig werden neben den üblichen C-förmigen Profilquerschnitten auch solche verwendet, bei denen die Profilenden zusätzlich nach innen abgewinkelt sind, so dass ein Längsschlitz mit parallel zu den Außenflanken verlaufenden Schlitzflanken entsteht. Die Maße der Schlitzgeometrien und insbesondere der nach innen umgebogenen Schenkelenden weisen herstellungsbedingt gewisse Maßtoleranzen auf, die zu Problemen mit den Schnellbefestigungselementen führen, da bei axial klemmenden Schnellbefestigern eine Anpassung an die von der Schienenform abhängige Klemmhöhe erfolgen muß.

Ein Schnellbefestiger der eingangs genannten Art ist aus der US 5,209,619 A bekannt.

Der Vorteil eines solchen Schnellbefestigungselements besteht darin, daß ein sicherer Halt in der vormontagestellung auch bei unterschiedlichen Materialstärken und/oder Maßabweichungen des Profilquerschnitts gewährleistet ist, da das radiale Klemmelement gegen eine der beiden Schlitzflanken verklemmt wird.

Die Aufgabe der vorliegenden Erfindung besteht darin, ein Schnellbefestigungselement zu schaffen, das eine möglichst kostengünstige Herstellung ermöglicht.

Erfindungsgemäß wird die Aufgabe durch ein Schnellbefestider eingangs bezeichneten Art gelöst, bei dem der Halter einstückig aus Blech hergestellt ist, wobei eine Trennfuge des Blechteils im Auflagebereich oder eine Trennfuge des Blechteils im Bereich des Schließelements angeordnet ist.

Der Halter kann beispielsweise aus Blech ausgestanzt und dann durch Biege- und Kantvorgänge ein seine endgültige Form gebracht werden.

Die Trennfuge des Blechteils kann im Auflagebereich angeordnet und vorzugsweise verzahnt sein, wobei sie mindestens eine Hinterschneidung aufweist, und/oder verschweißt ist. Durch die Hinterschneidung ist gewährleistet, daß bei einem Fixieren des Halters der Auflagebereich zum äußeren Auflegen auf der Profilschiene formstabil bleibt. Durch diese Anordnung der Trennfuge kann der in das Profil hineinragende Bereich des Halters einstückig sein. Die axial bewegliche und drehstarre Führung des Schließelements kann dadurch erreicht werden, daß der Halter das Schließelement eng umschließt.

Alternativ ist die einstückige Trennfuge des Blechteils im Bereich des Schließelements angeordnet. Dadurch läßt sich der Auflagebereich zum äußeren Auflegen auf der Profilschiene einstückig herstellen. Der Auflagebereich ist entsprechend formstabil. Zudem kann das schließelement einfach in den Halter eingebracht werden, in welchem es axial beweglich und drehstarr gehalten ist. Dafür kann der Halter bis zu einem gewissen Grad gebogen bzw. gekantet sein, bevor das Schließelement in den Halter eingefügt wird, der anschließend um das Schließelement gebogen bzw, gekantet wird, so das dieses den nötigen Halt hat. Das in dem Halter unverlierbar gehaltene Schließelement bedeutet eine Vereinfachung bei der Montage, da das Schließelement nicht separat eingefügt werden muß oder gar abhanden kommen kann.

In einer bevorzugten Ausführungsform weist der Halter ein zweites Klemmelement auf, das gegen die andere der beiden Schlitzflanken verklemmbar ist. Dadurch lassen sich bei gleichmäßiger Belastung die Klemmkräfte einfach erhöhen, da gegen beide Schlitzflanken verklemmt wird.

Weiterhin bevorzugt ist eine Ausführungsform, bei der das erste und das zweite Klemmelement diametral versetzt angeordnet sind, was durch den gleichmäßigen Kraftaufbau die Drehbewegung erleichtert, mit der das Schnellbefestigungselement von der Einführungsstellung in die Vormontagestellung gebracht wird.

Besonders bevorzugt ist eine Ausführungsform, bei der mindestens eines der beiden Klemmelemente ein Federelement ist. Damit sind auch größere Maßabweichungen des Profilquerschnitts möglich, da ein Federelement einen großen Stellweg besitzt. Gleichzeitig können die Federkräfte so ausgebildet werden, daß das Eindrehen in die Vormontagestellung einfacher und mit weniger Kraftaufwand erfolgen kann, als wenn beim Einstecken in die Klemmkräfte z. B. durch Materialverformung aufgebaut werden.

Bevorzugterweise sind die Klemmelemente einstückig als Federlaschen an dem Halter abgeformt, d. h. die Federlaschen können mit geringem Mehraufwand aus dem gleichen Material hergestellt werden.

In einer bevorzugten Anwendung sind an dem äußeren Auflagebereich des Halters zwei sich diametral gegenüberliegende Griffbereiche zum Drehen des Halters vorgesehen, durch die sich der Halter um eine mittige Achse in die Vormontagestellung drehen läßt.

Zweckmäßigerweise sind die Griffbereiche einstückig angeformte Laschen mit abgerundeten Ecken, die bereits während des Herstellungsvorgangs ausgestanzt werden können. Die abgerundeten Ecken minimieren das Verletzungsrisiko bei der Handhabung und der Montage.

Vorzugsweise ist der Halter im uhrzeigersinn von der Einführungsstellung in die Vormontagestellung drehbar. Dies entspricht einerseits der von Gewinden bekannten und auch sonst üblichen Bewegungsrichtung bei Einbauvorgängen. Andererseits wird damit gewährleistet, daß im Falle des Fixierens des Halters mittels Schließen einer Mutter-/Schraubenverbindung der Halter in der Vormontagestellung bleibt und beim Fixiervorgang nicht etwa zurück in die Einführungsstellung gedreht wird.

Vorzugsweise ist die Länge und die Geometrie des Schließelementes so gewählt, daß durch Anlage der Stirnflächen an den Innenseiten der Außenflanken der Profilschiene der Drehenschlag gebildet ist. Dies hat den Vorteil, daß neben der Ausbildung des Drehanschlags auch ein präziser Halt des Schließelements bezüglich der Profilschiene gewährleistet ist, was auch für das Fixieren des Schnellbefestigungselemente von Vorteil ist. Grundsätzlich kann der Drehanschlag aber auch am Halter ausgebildet sein, so dass das Schließelement ohne Anschlagfläche ausgebildet sein kann, damit ein und derselbe Typ des Schnellbefestigungselements auch bei unterschiedlichen Materialstärken der Profilschiene eingesetzt werden kann. Der Drehanschlag erfolgt dann 2. B. mittels in den Halter integrierter Anschlagelemente gegen die Schlitzflanken der Profilschiene.

In einer weiter bevorzugten Anwendung ist das Schließelement in der Vormontagestellung senkrecht zur Längsrichtung der Profilschiene ausgerichtet, so dass die Krafteinleitung in das Profil über definierbar Bereiche erfolgt und somit ein sicherer Halt bei der Verankerung der Lasten gewährleistet ist.

In einer zweckmäßigen Ausgestaltung der Erfindung ist das Schließelement im Bereich seiner Enden an der Seite zum Anliegen an den Schenkelenden jeweils mit einer Nut versehen, in welche die Schenkelenden eines Profils einrückbar sind, bei dem die einander zugewandten Schenkelenden nach innen abgewinkelt sind. Dadurch läßt sich bei Anwendung eines Gewindes zum Fixieren des Schnellbefestigungselements ein zusätzlicher Halt des Schließelements in der Profilschiene erreichen, wobei unter Belastung auch ein Aufweiten der Schiene verhindert wird.

Üblicherweise ist ein Montageelement mit dem Schließelement verbunden und eine an dem Montageteil befindliche Anschlagvorrichtung ist gegen die äußere Fläche des Auflagebereichs des Halters anpreßbar, so daß das Schließelement in einer Montagestellung von innen gegen die Schenkelenden der Profilschiene verspannbar ist. Das Fixieren erfolgt durch Anpressen der Anschlagvorrichtung gegen das Profil von außen, wodurch gleichzeitig das Schließelement von innen gegen die Profilschenkel angezogen wird. Dadurch ergibt sich ein guter Halt für die zu verankernden Lasten. Beispielsweise kann das Schließelement eine Mutter sein, in die als Montageteil ein Gewindestift eingedreht ist, an dem eine zweite Mutter gegen den Halter anpreßbar ist. Selbstverständlich sind für das Montageteil auch andere Varianten möglich, wie z.B. ein T-Anker, an den das Schließelement angeformt ist.

Nachfolgend wird anhand der beigefügten Zeichnungen näher auf ein Ausführungsbeispiel der Erfindung eingegangen. Es zeigen:
- Fig. 1: eine Schrägansicht des Befestigungselements von oben;
- Fig. 2: eine Schrägansicht des Befestigungselements nach Fig. 1 von unten;
- Fig. 3: eine Draufsicht des Befestigungselements;
- Fig. 4: eine Seitenansicht der Längsseite des Befestigungselements;
- Fig. 5: eine Seitenansicht der Querseite des Befestigungselements und
- Fig. 6: eine Draufsicht auf einen Blechrohling zur Herstellung des Befestigungselements nach Figs. 1 bis 5.

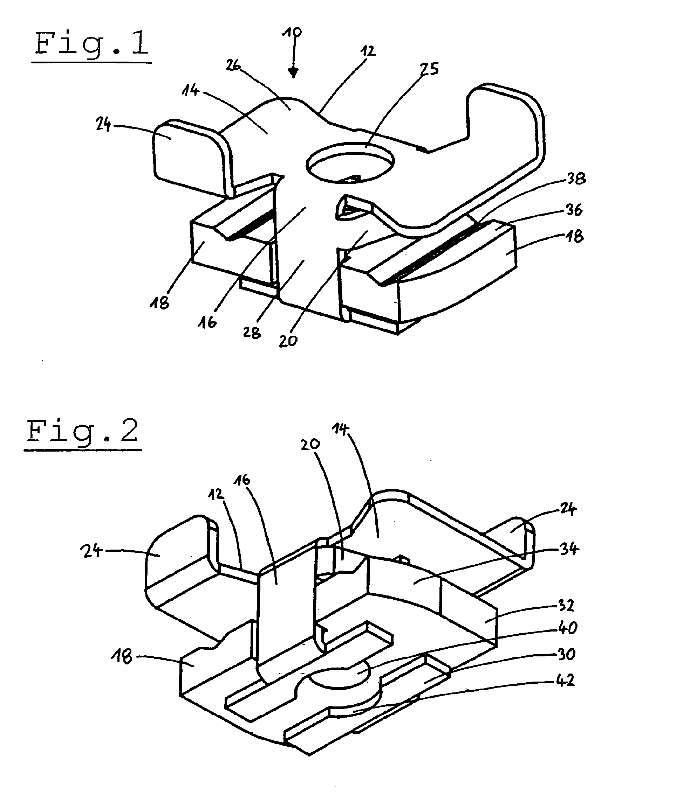

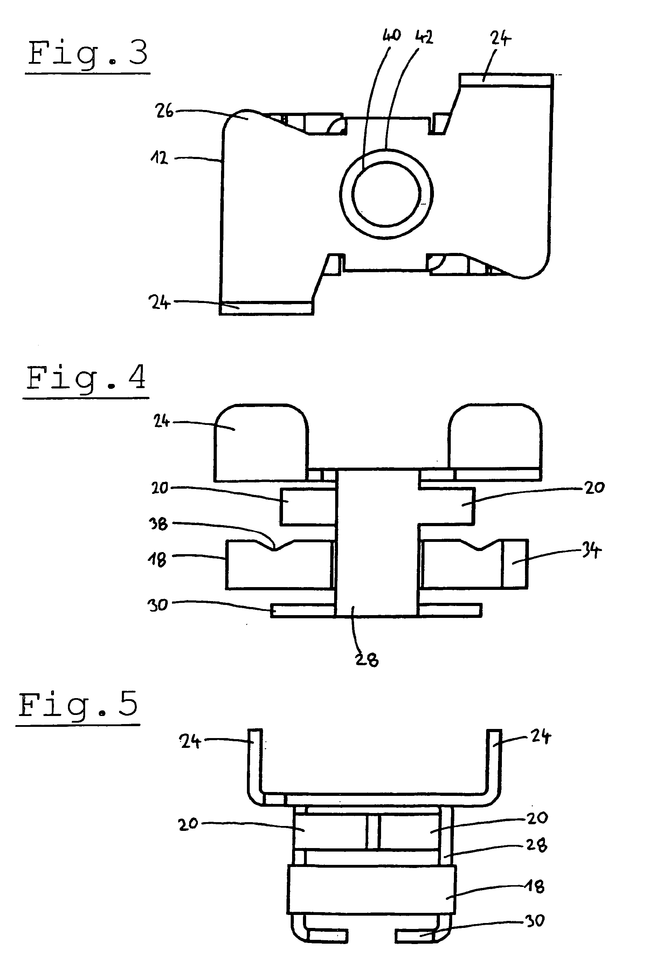

Figs. 1 bis 5 zeigen ein Schnellbefestigungselement 10 zum Verankern von Lasten in einer nicht dargestellten C-förmigen Profilschiene, die einen Längsschlitz mit parallel zu den Außenflanken verlaufenden Schlitzflanken besitzt. Das Schnellbefestigungselement 10 weist einen Halter 12 auf, der im wesentlichen einen plattenförmigen Auflagebereich 14 zum äußeren Auflegen auf der Profilschiene und einen davon nach unten ragenden Bereich 16 zum Einführen in die Profilschiene besitzt. In diesem Bereich 16 zum Einführen in die Profilschiene ist ein Schließelement 18 axial beweglich und drehstarr gehalten. Außerdem sind in dem Bereich 16 zum Einführen in die Profilschiene zwei als Federelement ausgebildete radiale Klemmelemente 20 vorgesehen.

Das Schnellbefestigungselement 10 ist so ausgebildet, daß es mit dem Bereich 16 in die Profilschiene eingeführt werden kann. Aus dieser Einführungsstellung, in der das länglich ausgebildete Schließelement 18 parallel zur Längsrichtung des Profils steht, ist das Schnellbefestigungselement 10 in eine Vormontagestellung drehbar. Dies erfolgt durch Drehen um ca. 90°, so daß das Schließelement 18 im wesentlichen quer zur Längsrichtung des Profils steht. Je nach Ausbildung des Halters 12 und des Schließelements 18 sind selbstverständlich auch davon abweichende Vormontagestellungen möglich. In der Vormontagestellung hintergreift das Schließelement 18 die Schenkelenden der Profilschiene. In der Vormontagestellung ist das Schnellbefestigungselement 10 durch die als Federlaschen ausgebildeten Klemmelemente 20 in seiner Position gehalten, in der es jedoch noch keine Lasten aufnehmen kann. Die Vormontagestellung dient dazu, das Schnellbefestigungselement 10 bezogen auf die zu verankernden Lasten zunächst genau auszurichten und erst dann so zu fixieren, daß die Aufnahme der Lasten in der Montagestellung erfolgen kann.

Durch Drehen des Schnellbefestigungselements 10 von der Einführungsstellung in die Vormontagestellung werden die radialen Klemmelemente 20 gegen die Schlitzflanken der Profilschiene verklemmt. Dieses radiale Verklemmen hat den Vorteil, daß das Schnellbefestigungselement auch bei Profilschienen mit unterschiedlichen Materialstärken eingesetzt werden kann, da die Verklemmung nicht axial sondern durch radiales Verklemmen in dem Schlitz der Profilschiene erfolgt. Besonders geeignet ist des Schnellbefestigungselement 10 auch für die Verwendung bei Profilschienen, deren Schenkelenden nach innen abgewinkelt sind. Bei diesem Profiltyp treten fertigungsbedingt häufig Maßabweichung bei der Höhe der nach innen ragenden Schenkelenden auf.

Das Schließelement 18 ist so in dem Halter 12 geführt, daß es sich unter keinen Umständen von diesem lösen und so bei der Handhabung und während des Einbauens nicht aus dem Halter 12 herausfallen kann, was zu Verzögerungen führen würde.

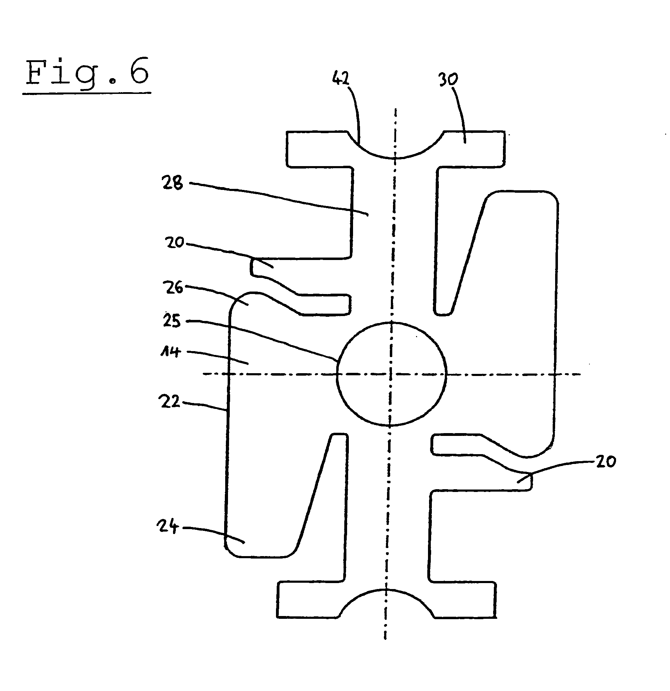

Der Halter 12 ist erfindungsgemäß einstückig aus Blech hergestellt. Dies erfolgt durch beispielsweise Ausstanzen eines in Fig. 6 gezeigten Rohlings 22 des Halters 12, bei dem die einzelnen Bereiche des Halters 12 erkennbar sind. Diese Fertigungsmethode erlaubt eine einfache und kostengünstige Produktion. Durch Kant- und Biegevorgänge der zunächst planen Abwicklung 22 erhält der Halter 12 seine Form.

An dem äußeren Auflagebereich 14 des Halters 12 sind zwei sich diametral gegenüberliegende Griffbereiche 24 zum Drehen des Halters 12 vorgesehen. Die Griffbereiche 24 bestehen aus einstückig angeformten Laschen mit abgerundeten Ecken, durch welche die Verletzungsgefahr bei der Handhabung minimiert ist. Die Griffbereiche 24 sind so angeordnet, daß das Schnellbefestigungselement 10 im Uhrzeigersinn von der Einführungsstellung in die Vormontagestellung drehbar ist, wobei die manuelle Kraftübertragung für die Drehbewegung auf der Außenseite der Griffbereiche 24 erfolgt. So läßt sich das Schnellbefestigungselement 10 mit einer Hand leicht eindrehen. Der äußere Auflagebereich 14 des Halters 12 ist so dimensioniert, daß er den Längsschlitz der Profilschiene überdeckt. Dazu sind an den Schmalseiten gegenüber den Griffbereichen 24 Überdeckungsbereiche 26 vorgesehen, so daß ein genaues Positionieren in der Einführungsstellung bezüglich der Eindringtiefe des Halters 12 in die Profilschiene nicht erforderlich ist.

An dem äußeren Auflagebereich 14 des Halters 12 sind an den Längsseiten mittig jeweils nach unten ragende Laschen 28 angeordnet, an denen unterhalb des Auflagebereichs 14 die Klemmelemente 20 einstückig an dem Halter 12, d. h. an den Laschen 28, angeformt sind. Die Laschen 28 sind an ihren unteren, verbreiterten Enden 30 zueinander umgebogen und durch eine Trennfuge voneinander getrennt.

Das längsförmige Schließelement 18 ist in dem Halter 12 zwischen den nach unten ragenden Laschen 28 angeordnet. Die Laschen 28 greifen in Ausnehmungen des Schließelements 18 ein. Dadurch ist das Schließelement 18 zwischen den von den Laschen 28 nach innen abstehenden Klemmelementen 20 und den von den Laschen 28 zueinander nach innen abgewinkelten Enden 30 drehstarr aber axial beweglich geführt, d.h. das Schließelement 18 weist einen durch die Klemmelemente 20 und die Laschenenden 30 definierten Bewegungsspielraum auf.

Das Schließelement 18 ist in seiner Länge und Geometrie so gewählt, daß es beim Anlegen der Stirnflächen 32 an den Innenseiten der Außenflanken der Profilschiene einen Drehanschlag bildet. Die Stirnseiten 32 sind dazu jeweils an einer diametral gegenüberliegenden Seite mit einer leichten Rundung 34 versehen, um das Eindrehen in die Vormontagestellung zu ermöglichen, in der das Schließelement 18 senkrecht zu Längsrichtung der Profilschiene ausgerichtet ist und in der die Stirnseiten des Schließelementes 18 an den Innenseiten der Profillängsseiten anliegen und das Schnellbefestigungselement 10 gegen Überdrehen sichern. Das Schließelement 18 ist im Bereich seiner stirnseitigen Enden 32 auf der Oberseite 34 jeweils mit einer Nut 38 versehen. In diese Nuten 38 legen sich die Schenkelenden einer Profilschiene, bei der die einander zugewandten Schenkelenden nach innen abgewinkelt sind. Durch die Nuten 38 läßt sich bei Anwendung eines Gewindes zum Fixieren des Schnellbefestigungselements 10 ein zusätzlicher Halt des Schließelements 18 in der Profilschiene erreichen, so daß die Lage des Schließelements 18 exakt definiert ist und auch die Schiene unter Last stabilisiert wird.

Das Schließelement 18 weist eine mittige Durchgangsbohrung 40 auf, in die als Montageteil ein nicht dargestellter Gewindestift eingedreht wird. Dazu ist an dem Auflagebereich 14 des Halters 12 eine mittige kreisförmige Ausnehmung 42 zum Durchführen des Gewindestiftes vorgesehen. Die Laschenenden 30 der Aufweitung, durch die das Schließelement auf der Unterseite gehalten ist, weisen im Bereich der Durchgangsbohrung entsprechende Ausnehmungen 44 in Form von Kreissegmenten auf.

An dem Gewindestift ist eine Lochscheibe als Anschlagvorrichtung vorgesehen, die mittels einer zweiten Mutter auf dem Gewindestift durch Anziehen der zweiten Mutter gegen die Oberseite des Auflagebereichs 14 des Halters 12 gepreßt wird. Da das Schließelement 18 durch Anliegen der Stirnflächen 32 an den Innenseiten der Profilschiene gegen Drehen gehalten ist, bedarf es keines weiteren Werkzeugs zur drehstarren Arretierung. Durch Anziehen der zweiten Mutter wird das Schließelement 18 von innen gegen die Schenkelenden der Profilschiene verspannt. Mittels des Montageteils kann anschließend die Last in der Profilschiene verankert werden.

Eine große Variabilität für die Befestigung der Lasten an der Profilschiene ist dadurch gewährleistet, daß für das Montageteil handelsübliche Halbzeuge/Komponenten verwendet werden. Die Lastabtragung erfolgt durch Haltevorrichtungen, die an den Gewindestiften befestigt werden. In das Gewinde des Schließelements lassen sich aber auch andere Montageelemente, wie z. B. Schraubhaken oder Rohrschellen mit einem angeformten Gewindeschaft, eindrehen.

Um die Zahl der benötigten Einzelteile bei der Montage auf ein Minimum zu reduzieren, kann in einer Ausführungsvariante ein T-Anker verwendet werden, an den das Schließelement 18 angeformt ist.

Idealerweise sind alle Einzelteile des Schnellbefestigungselements 10 bereits bei der Lieferung vormontiert verbunden. Somit können keine Kleinteile abhanden kommen, was den Montagevorgang erheblich verzögern könnte.

## Patentansprüche

1. Schnellbefestigungselement (10) zum Verankern von Lasten in einer C-förmigen Profilschiene, die einen Längsschlitz mit parallel zu den Außenflanken verlaufenden Schlitzflanken besitzt, mit einem Halter (12), der einen Auflagebereich (14) zum äußeren Auflegen auf der Profilschiene und einen Bereich (16) zum Einführen in die Profilschiene aufweist, mittels dessen ein längliches Schließelement (18) des Schnellbefestigungselements (10) axial beweglich und drehstarr gehalten ist, wobei der Halter (12) in der Profilschiene von einer Einführungsstellung in eine davon abweichende Vormontagestellung drehbar ist und ein Drehanschlag zum Anliegen an der Profilschiene vorgesehen ist, so daß das Schnellbefestigungselement (10) gegen ein Überdrehen gesichert ist, wobei der Halter (12) wenigstens ein radiales Klemmelement (20) aufweist, das in der Vormontagestellung gegen eine der beiden Schlitzflanken verklemmbar ist, **dadurch gekennzeichnet, dass** der Halter (12) einstückig aus Blech hergestellt ist, wobei eine Trennfuge des Blechteils im Auflagebereich (14) oder eine Trennfuge des Blechteils im Bereich des Schließelements (18) angeordnet ist.

2. Schnellbefestigungselement nach Anspruch 1, **dadurch gekennzeichnet, dass** bei einer Trennfuge des Bleichteils in Auflagebereich die Trennfuge verzahnt verläuft, wobei sie mindestens eine Hinterschneidung aufweist und/oder verschweißt ist.

3. Schnellbefestigungselement nach Anspruch 1 oder 2, **dadurch gekennzeichnet, daß** der Halter (12) ein zweites Klemmelement (20) aufweist, das gegen die andere der beiden Schlitzflanken verklemmbar ist.

4. Schnellbefestigungselement nach Anspruch 3, **dadurch gekennzeichnet, daß** das erste und das zweite Klemmelement (20) diametral versetzt angeordnet sind.

5. Schnellbefestigungselement nach einem der Ansprüche 1 bis 4, **dadurch gekennzeichnet, daß** mindestens eines der beiden Klemmelemente (20) ein Federelement ist.

6. Schnellbsfestigungselement nach einem der vorhergehenden Ansprüche, **dadurch gekennzeichnet, daß** an dem äußeren Auflagebereich (14) des Halters zwei sich diametral gegenüberliegende Griffbereiche (24) zum Drehen des Halters (12) vorgesehen sind.

7. Schnellbefestigungselement nach einem der vorhergehenden Ansprüche, **dadurch gekennzeichnet, daß** der Halter (12) an dem in die Profilschiene hineinragenden Bereich in seiner Länge und Geometrie so ausgebildet ist, daß er einen Drehanschlag in der Vormontagestellung bildet, wobei der Anschlag gegen die Innenflanken der Profilschiene und/oder die Schlitzflanken der Profilschiene erfolgt.

8. Sehnellbefestigungselement nach einem der Ansprüche 1 bis 6, **dadurch gekennzeichnet, daß** die Länge und die Geometrie des Schließelements (18) so gewählt sind, daß durch Anlage der Stirnflächen (32) an den Innenseiten der Außenflanken der Profilschiene der Drehanschlag gebildet ist.

9. Schnellbefestigungselement nach einem der vorhergehenden Ansprüche, **dadurch gekennzeichnet, daß** das Schließelement (18) im Bereich seiner Enden auf der zum Anliegen an den Schenkelenden bestimmten Seite (36) jeweils eine Nut (38) aufweist, in welche die Schenkelenden eines Profils einrückbar sind, bei dem die einander zugewandten Schenkelenden nach innen abgewinkelt sind.

## Claims

1. A quick-fastening element (10) for anchoring loads in a C-shaped profile rail which has a longitudinal slot with slot flanks extending parallel to the outer flanks, with a holder (12) which has a support zone (14) for external support on the profile rail and a zone (16) for insertion into the profile rail, by means of which an elongate closure element (18) of the quick-fastening element (10) is retained axially movably and rotationally rigidly, wherein the holder (12) can be rotated in the profile rail from an insertion position into a preassembly position differing therefrom, and a rotation stop is provided for abutment against the profile rail so that the quick-fastening element (10) is protected from being overtwisted, wherein the holder (12) has at least one radial clamping member (20) which in the preassembly position can be wedged against one of the two slot flanks, **characterised in that** the holder (12) is produced in one piece from sheet material, wherein a separating line of the sheet material part is disposed in the support zone (14) or a separating line of the sheet material part is disposed in the vicinity of the closure element (18).

2. A quick-fastening element according to Claim 1, **characterised in that**, with a separating line of the sheet material part in the support zone, the separating line extends in serrated fashion, wherein it has at least one undercut and/or is welded.

3. A quick-fastening element according to Claim 1 or 2, **characterised in that** the holder (12) has a second clamping member (20) which can be wedged against the other one of the two slot flanks.

4. A quick-fastening element according to Claim 3, **characterised in that** the first and second clamping members (20) are arranged diametrically offset.

5. A quick-fastening element according to any one of Claims 1 to 4, **characterised in that** at least one of the two clamping members (20) is a spring element.

6. A quick-fastening element according to any one of the preceding Claims, **characterised in that** two diametrically opposed grip zones (24) for rotating the holder (12) are provided on the external support zone (14) of the holder.

7. A quick-fastening element according to any one of the preceding Claims, **characterised in that**, in the zone projecting into the profile rail, the holder (12) is so formed in its length and geometry that it forms a rotation stop in the preassembly position, wherein abutment takes place against the inner flanks of the profile rail and/or the slot flanks of the profile rail.

8. A quick-fastening element according to any one of the Claims 1 to 6, **characterised in that** the length and geometry of the closure element (18) are chosen so that the rotation stop is formed by the end faces (32) abutting against the insides of the outer flanks of the profile rail.

9. A quick-fastening element according to any one of the preceding Claims, **characterised in that** in the vicinity of its ends the closure element (18) has on the side (36) intended to abut against the arm ends a respective groove (38), into which the arm ends of a profile can engage, for which the mutually facing arm ends are angled inwards.

## Revendications

1. Elément de fixation rapide (10) pour ancrer des charges dans des rails profilés à section en forme de C dont la fente longitudinale dont les flancs de fente sont parallèles aux flancs extérieurs, comprenant un support (12) ayant une zone d'appui (14) pour s'appuyer extérieurement sur le rail profilé et une zone (16) pour s'introduire dans le rail profilé, à l'aide duquel un élément de fermeture (18), allongé de l'élément de fixation rapide (10) est tenu de façon mobile axialement et rigide en rotation,
le support (12) pouvant être tourné dans le rail profilé d'une position d'introduction dans une position de pré-assemblage qui en diffère, et une butée de rotation pour s'appuyer contre le rail profilé de façon à protéger l'élément de fixation rapide (10) pour éviter de survisser, le support (10) ayant au moins un élément de serrage radial (20) qui se serre en position de pré-assemblage contre l'un des deux flancs de fente,
**caractérisé en ce que**
le support (12) est fabriqué en une seule pièce en tôle et la jonction de la pièce en tôle se trouve dans la zone d'appui (14) ou un joint de la pièce en tôle est prévu au niveau de l'élément de fermeture (18).

2. Elément de fixation rapide selon la revendication 1,
**caractérisé en ce que**
pour un joint de la pièce de tôle dans la zone d'appui, le joint est dentelé et comporte au moins une partie en contredépouille et/ou est soudé.

3. Elément de fixation rapide selon la revendication 1 ou 2,
**caractérisé en ce que**
le support (12) comporte au moins un second élément de serrage (20) qui peut être serré contre l'autre des deux flancs de la fente.

4. Elément de fixation rapide selon la revendication 3,
**caractérisé en ce que**
le premier et le second élément de serrage (20) sont décalés diamétralement.

5. Elément de fixation rapide selon les revendications 1 à 4,
**caractérisé en ce qu'**
au moins l'un des deux éléments de serrage (20) est un élément à ressort.

6. Elément de fixation rapide selon les revendications précédentes,
**caractérisé en ce que**
la zone d'appui extérieure (14) du support comporte deux zones de prise (24) diamétralement opposées, pour tourner le support (12).

7. Elément de fixation rapide selon les revendications précédentes,
**caractérisé en ce que**
le support (12) a une longueur et une géométrie de sa zone pénétrant dans le rail profilé de façon à former une butée de rotation en position de pré-assemblage, la butée venant contre les flancs intérieurs du rail profilé et/ou des flancs de la fente du rail profilé.

8. Elément de fixation rapide selon les revendications 1 à 6,
**caractérisé en ce que**
la longueur et la géométrie de l'élément de fermeture (18) sont choisies pour que l'appui des surfaces frontales (32) contre le côté intérieur des flancs extérieurs du rail profilé constitue la butée de rotation.

9. Elément de fixation rapide selon les revendications précédentes,
**caractérisé en ce que**
l'élément de fermeture (18) comporte dans la région de ses extrémités, sur le côté (36) destiné à s'appuyer contre les extrémités de branches, une rainure (38) respective dans laquelle les extrémités des branches d'un profil peuvent s'engager, et dont les extrémités des branches tournées l'une vers l'autre, sont recourbées vers l'intérieur.
